# EUROPEAN PATENT APPLICATION

(11) **EP 3 330 100 A1**
(43) Date of publication of application: **06.06.2018**
(21) Application number: 17204386.1
(22) Date of filing: 29.11.2017
(51) Int. Cl.: B60C 7/18, B60B 9/26

(54) **STRUCTURALLY SUPPORTED TIRE**

(30) Priority: 01.12.2016 US 201615366075
(71) Applicant: The Goodyear Tire & Rubber Company, Akron, OH 44316 (US)
(72) Inventor: ORLEWSKI, Piotr, L-9021 Ettelbruck (LU); SPORTELLI, Francesco, L-3249 Bettembourg (LU)
(74) Representative: Kutsch, Bernd

(57) **Abstract**

A tire (300) comprising a circular tread band (310), a circular hub (315) for attachment to an axle and a structure located radially between the tread band (310) and the hub (315), wherein the structure includes a plurality of annular rings (320) which respectively interconnect the tread band (310) and the hub (315) and are configured to transfer a load from the tread band (310) to the hub (315), and the plurality of annular rings (320) comprises a first group of rings being disposed axially adjacent each other and a second group of rings being concentric and disposed radially adjacent each other.

## Description

### Field of the Invention

The present invention relates to a tire, and more particularly, to a radial passenger tire or a high performance tire having a three dimensional spacer component. It provides a structurally supported tire as a lightweight tire.

### Background of the Invention

The pneumatic tire has been the solution of choice for vehicular mobility for over a century. Modern belted, radial carcass, pneumatic tires are remarkable products that provide an effective means for supporting applied loads while allowing reasonable vertical and lateral compliance. The pneumatic tire obtains its mechanical attributes largely due to the action of internal air pressure in the tire cavity. Reaction to the inflation pressure corrects rigidities to the belt and carcass components. Inflation pressure is then one of the most important design parameters for a pneumatic tire.

Good pressure maintenance is required to obtain the best performance from a pneumatic tire. Inflation pressure below that specified can result in a loss of fuel economy. Of primary importance is that a conventional pneumatic tire is capable of very limited use after a complete loss of inflation pressure. Many tire constructions have been proposed for continued mobility of a vehicle after a complete loss of air pressure from the tire. Commercially available runflat tire solutions are pneumatic tires having added sidewall reinforcements or fillers to permit the sidewalls to act in compression as load supporting members during deflated operation. This added reinforcement often results in the disadvantages of higher tire mass and reduced riding comfort. Other attempts to provide runflat capability utilize essentially annular reinforcing bands in the tire crown portion. In these solutions, the rigidity of the tread portion results partly from the inherent properties of the annular reinforcing band and partly from the reaction to inflation pressure. Still other solutions rely on secondary internal support structures attached to the wheel. These supports add mass to the mounted assembly and either increase mounting difficulty or may require the use of multiple piece rims. All of these approaches are hybrids of an otherwise pneumatic tire structure and suffer from design compromises that are optimal for neither the inflated nor deflated states. In addition, these runflat solutions require the use of some means to monitor tire inflation pressure and to inform the vehicle operator if the inflation pressure is outside the recommended limits.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

### Summary of the Invention

The invention relates to a tire in accordance with claim 1.

Dependent claims refer to preferred embodiments of the invention.

A first tire in accordance with the present invention has an axis of rotation. The first tire includes a circular tread band, a circular hub for attachment to an axle, and a structure including a plurality of annular rings interconnecting the tread band and the hub and transferring a load from the tread band to the hub. A first group of rings are disposed axially adjacent each other and a second group of rings are concentric and disposed radially adjacent each other.

According to a preferred aspect of the invention, the rings of the plurality of rings include layers of fabric.

According to another preferred aspect of the invention, the rings of the plurality of rings include reinforcement members of yarn, filaments, fibers, and/or fabric.

According to another preferred aspect of the invention, the rings of the plurality of rings include layers connected together by reinforcement members.

According to another preferred aspect of the invention, the rings of the plurality of rings include knitted layers.

According to another preferred aspect of the invention, the rings of the plurality of rings include an "open" layer of individual pile fibers connecting a first layer of fabric and a second layer of fabric.

According to another preferred aspect of the invention, the rings of the plurality of rings include a "closed" layer of fabric piles connecting a first layer and a second layer.

According to another preferred aspect of the invention, the plurality of rings are interconnected by annular bands.

According to another preferred aspect of the invention, the annular bands are constructed or rubber, of plastic or of metal.

A second tire in accordance with the present invention has an axis of rotation. The second tire includes a circular tread band, a circular hub for attachment to an axle, and a structure including a plurality of spokes interconnecting the tread band and the hub and transferring a load from the tread band to the hub, the structure having a group of radially extending spokes disposed axially adjacent each other.

According to a preferred aspect of the invention, the spokes include layers of twisted fabric.

According to another preferred aspect of the invention, the spokes include reinforcement members of yarn, filaments, fibers, and/or fabric.

According to another preferred aspect of the invention, the spokes include layers connected together by reinforcement members.

According to another preferred aspect of the invention, the spokes include knitted layers.

According to another preferred aspect of the invention, the spokes include an "open" layer of individual pile fibers connecting a first layer of fabric and a second layer of fabric.

According to another preferred aspect of the invention, the spokes include a "closed" layer of fabric piles connecting a first layer and a second layer.

### Definitions

"Axial" and "Axially" mean the lines or directions that are parallel to the axis of rotation of the tire.

"Carcass" means the tire structure apart from the belt structure, tread, undertread over the plies, but including the beads.

"Casing" means the carcass, belt structure, beads, sidewalls and all other components of the tire excepting the tread and undertread, i.e., the whole tire.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Knitted" means a structure producible by interlocking a series of loops of one or more yarns by means of needles or wires, such as warp knits and weft knits.

"Lateral" means a direction parallel to the axial direction.

"Radial" and "radially" mean directions radially toward or away from the axis of rotation of the tire.

"Three dimensional spacer structure" may mean a three dimensional structure composed from two outer layers of fabric, each outer layer of fabric having reinforcement members (such as yarns, filaments, fibers, and/or fabric) which extend in a first and a second direction, the two outer layers connected together by reinforcement members (yarns, filaments, fibers, and/or fabric) or other knitted layers extending in a defined third direction. An "open" three dimensional spacer structure comprises individual pile fibers or reinforcements connecting the first and the second layer of fabric. A "closed" three dimensional structure utilizes fabric piles that connect the first and the second layers.

"Tread band" means an annular structure that may include a shear band, a tread band, and/or a belt structure.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire in accordance with the present invention;
FIG. 2 represents a schematic sectional view taken along line '2-2' in FIG. 1;
FIG. 3 represents a schematic cross-sectional view of another example tire in accordance with the present invention;
FIG. 4 represents a schematic sectional view taken along line '4-4' in FIG. 3;
FIG. 5 represents a schematic detail of an assembly step in accordance with the present invention;
FIG. 6 represents a schematic cross-sectional view of still another example tire in accordance with the present invention;
FIG. 7 represents a schematic sectional view taken along line '7-7' in FIG. 6;
FIG. 8 represents a schematic detail of an example three-dimensional fabric for use with the present invention;
FIG. 9 represents a schematic detail of another example three-dimensional fabric in accordance with the present invention;
FIG. 10 represents a schematic detail of still another example three-dimensional fabric in accordance with the present invention;
FIG. 11 represents a schematic detail of yet another example three-dimensional fabric in accordance with the present invention;
FIG. 12 represents a schematic detail of still another example three-dimensional fabric in accordance with the present invention;
FIG. 13 represents a schematic detail of yet another example three-dimensional fabric in accordance with the present invention; and
FIG. 14 represents a schematic detail of still another example three-dimensional fabric in accordance with the present invention.

### Detailed Description of Example Embodiments of the Invention

Three dimensional fabric may provide large design freedom for different lightweight pneumatic and non-pneumatic tire components and designs. Three dimensional fabric may be tuned to yield varied mechanical, thermal, and/or electrical properties. Three dimensional fabric may further efficiently distribute stress from one direction to others directions.

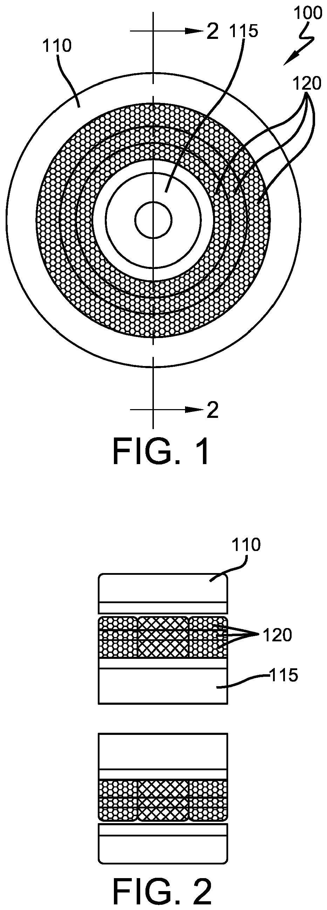

FIGS. 1-2 show an example tire 100 in accordance with the present invention. The tire 100 includes a circular tread band 110, a circular hub 115 for attachment to an axle (not shown), and a structure including a plurality of annular rings 120 interconnecting the tread band 110 and the hub 115 and transferring a load from the tread band to the hub. The annular rings 120 preferably include several rings disposed axially adjacent each other (three in FIG. 2) as well as several concentric rings disposed radially adjacent each other (three in FIGS. 1-2).

These rings 120 preferably include layers of fabric. Some layers may have reinforcement members (such as yarns, filaments, fibers, and/or fabric) which extend in a first and a second direction. Other layers may be connected together by reinforcement members (yarns, filaments, fibers, and/or fabric) or other knitted layers extending in a defined third direction. An "open" layer may include individual pile fibers or reinforcements connecting a first and a second layer of fabric. A "closed" layer may include fabric piles connecting a first layer and a second layer.

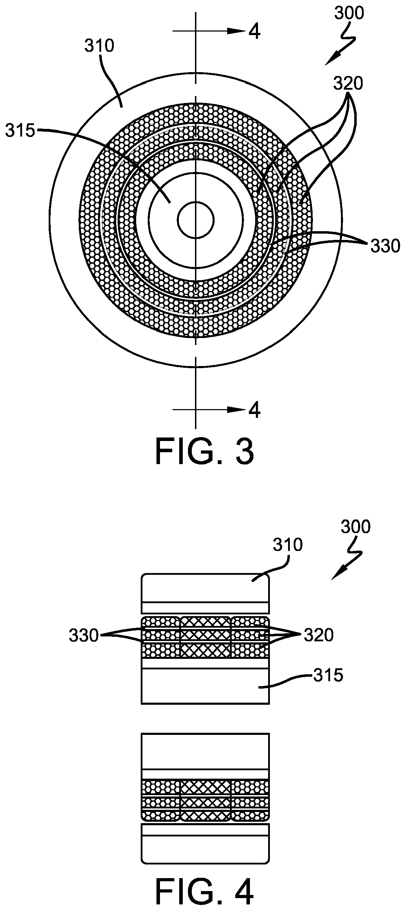

FIGS. 3-4 show an example tire 300 in accordance with the present invention. The tire 300 includes a circular tread band 310, a circular hub 315 for attachment to an axle (not shown), and a structure including a plurality of annular rings 320 interconnecting the tread band 310 and the hub 315 and transferring a load from the tread band to the hub. The rings 320 are preferably interconnected by annular bands 330 constructed of materials such as rubber, plastic, metal, and/or other suitable material. The annular rings 320 preferably include several rings disposed axially adjacent each other (three in FIG. 4) as well as several concentric rings disposed radially adjacent each other (three in FIGS. 3-4).

These rings 320 may include layers of fabric. Some layers may have reinforcement members (such as yarns, filaments, fibers, and/or fabric) which extend in a first and a second direction. Other layers may be connected together by reinforcement members (yarns, filaments, fibers, and/or fabric) or other knitted layers extending in a defined third direction. An "open" layer may include individual pile fibers or reinforcements connecting a first and a second layer of fabric. A "closed" layer may include fabric piles connecting a first layer and a second layer.

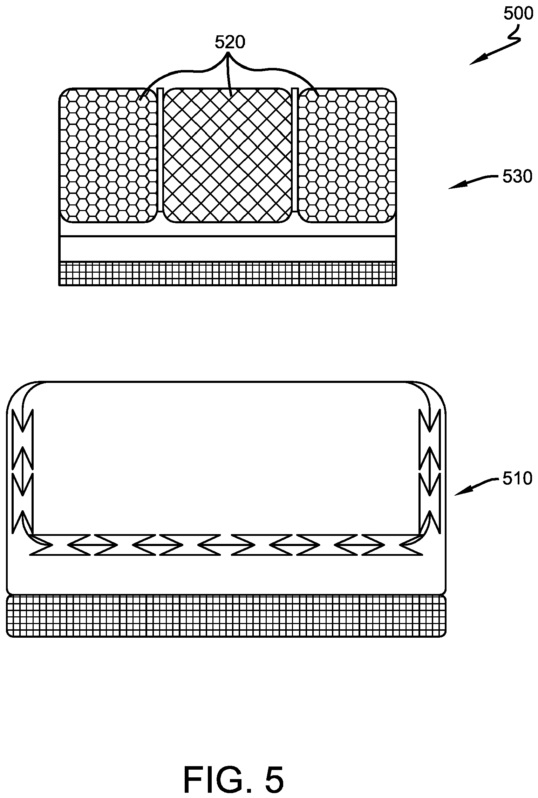

FIG. 5 shows an example assembly step 500 in accordance with the present invention. A tire casing 510 preferable includes a plurality of annular rings 520 (three in FIG. 5) that may or may not be similar to the rings 120, 320 of FIGS. 1-4. The annular rings 520 may have identical or different constructions, as desired. Preferably, the rings 520 together define a cartridge 530 for replacement in the corresponding casing 510.

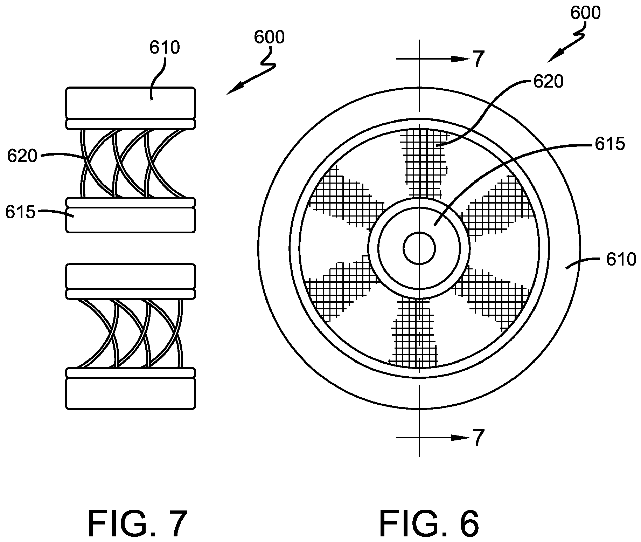

FIGS. 6-7 show an example tire 600 in accordance with the present invention. The tire 600 includes a circular tread band 610, a circular hub 615 for attachment to an axle (not shown), and a structure including a plurality of radially extending twisted spokes 620 interconnecting the tread band 610 and the hub 615 and transferring a load from the tread band to the hub. The spokes 620 may be constructed of materials such as rubber, plastic, metal, and/or other suitable material. The annular rings 320 may include several spokes disposed axially adjacent each other (three in FIG. 7).

The rings 120, 320 and spokes 620 preferably include layers of fabric. Some layers may have reinforcement members (such as yarns, filaments, fibers, and/or fabric) which extend in a first and a second direction. Other layers may be connected together by reinforcement members (yarns, filaments, fibers, and/or fabric) or other knitted layers extending in a defined third direction. An "open" layer may include individual pile fibers or reinforcements connecting a first and a second layer of fabric. A "closed" layer may include fabric piles connecting a first layer and a second layer.

The hub 115, 315, 615 may be metal, polymer and/or carbon material. Each ring 120, 320 and/or spoke 620 may be coated/dipped in a dedicated solution for increasing rigidity and strength.

Preferably, successive concentric rings 120, 320 of decreasing radius are joined together, preferably by a flexible polymer adhesive layer with or without radial reinforcement.

The fabric may be constructed of polyester-terephthalate (polyethylene-terehthalate), high performance fibers, etc. These fibers may be constructed as a single component, from such materials as nylon fiber, rayon fiber, polyester fiber, carbon fiber, glass fiber, basalt fiber, polyethylene fiber, aramid fiber, and/or other suitable high performance fibers or of multi component fibers consisting of a combination of these materials. The light weight and enhanced mechanical properties of these fibers may allow for many design improvements effecting cost, weight, rolling resistance, etc. Thickness of deck layers (e.g., shear bands of a non-pneumatic tire), roll width, density, and height of vertical piles may be adjusted to meet various tire requirements. The cells between two deck layers may be filled with light weight material, wires, tubes, foam, sealant material, sensors, etc.

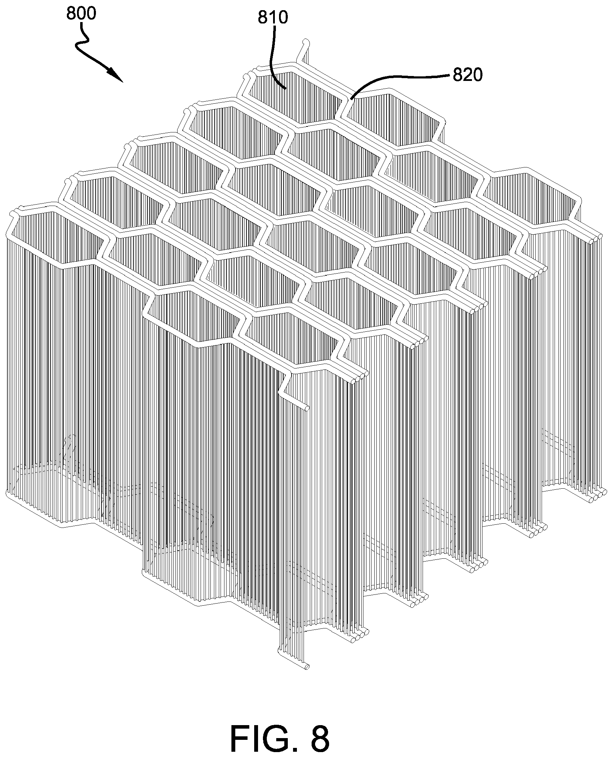

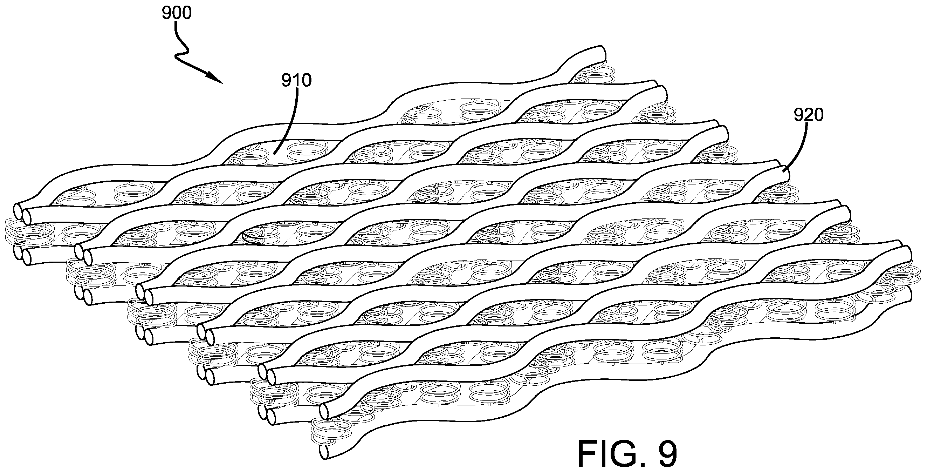

The materials and material properties of textile reinforced composite structures 120, 320, 620 may be specially customized for particular load situations by modifying the fiber material and/or architecture. For example, one five centimeter cube 400 of a three dimensional fabric may weigh only 6.5 grams (FIG. 8). The cube 800 may have a plurality of open cells 810 defined by the three-dimensional structure of the fabric 820. Another example structure 900 may be five centimeters by five centimeters by 0.7 centimeters and weigh 1.1 grams (Fig. 9). A conventional chipper compound of the same dimensions may weigh 30.0 grams. The structure 900 may have a plurality of open cells 910 defined by the three-dimensional structure of the fabric 920.

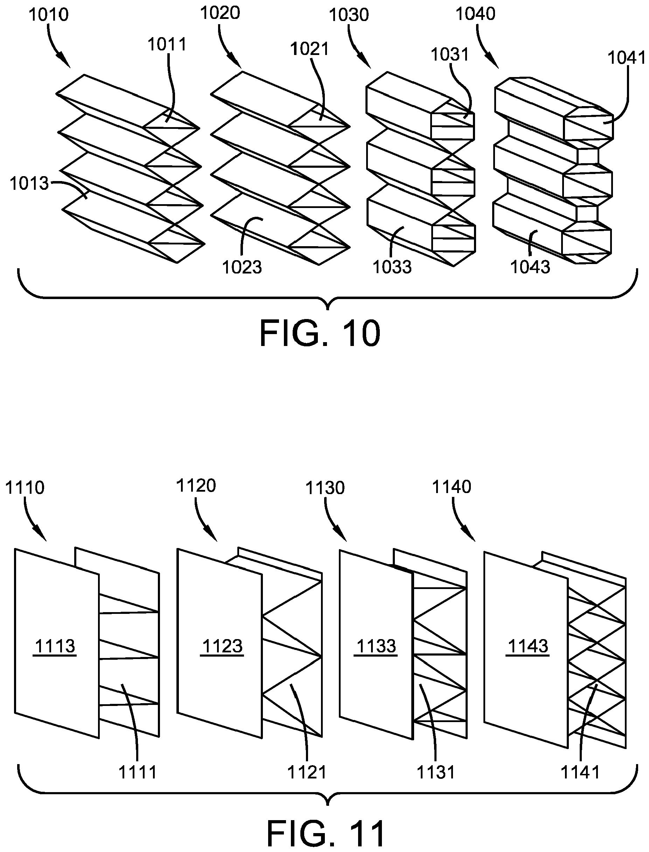

Fig. 10 shows four example hexagonal constructions 1010, 1020, 1030, 1040 that may be used as rings 120, 320 and/or spokes 620 in a non-pneumatic tire 100, 300, 600. The constructions 1010, 1020, 1030, 1040 may have a plurality of closed cells 1011, 1021, 1031, 1041 defined by the three-dimensional structure of the fabric 1013, 1023, 1033, 1043.

Fig. 11 shows four examples three plane constructions 1110, 1120, 1130, 1140 that may be used as rings 120, 320 and/or spokes 620 in a non-pneumatic tire 100, 300, 600. The constructions 1110, 1120, 1130, 1140 may have a plurality of closed cells 1111, 1121, 1131, 1141 defined by the three-dimensional structure of the fabric 1113, 1123, 1133, 1143.

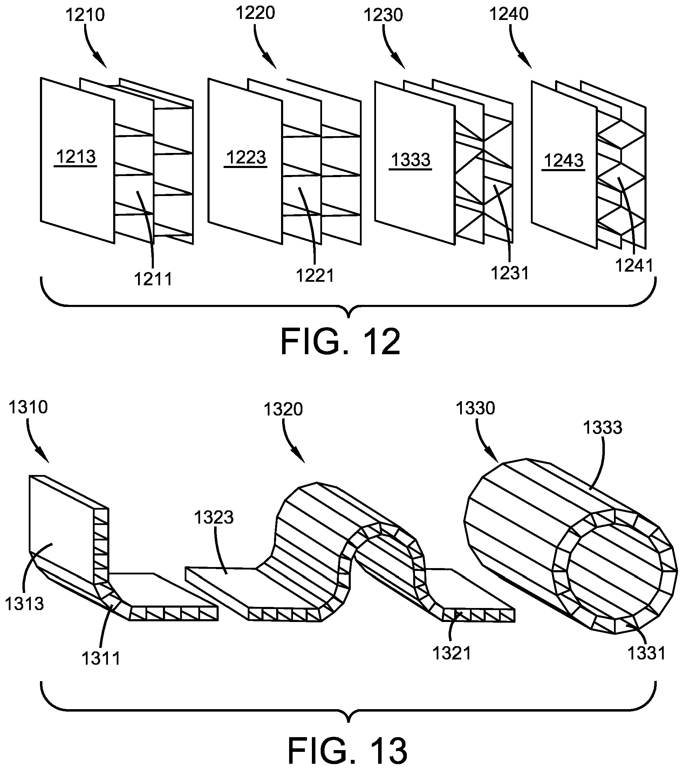

Fig. 12 shows four example two plane constructions 1210, 1220, 1230, 1240 that may be used as rings 120, 320 and/or 620 in a non-pneumatic tire 100, 300, 600. The constructions 1210, 1220, 1230, 1240 may have a plurality of closed cells 1211, 1221, 1231, 1241 defined by the three-dimensional structure of the fabric 1213, 1223, 1233, 1243.

Fig. 13 shows three example curved constructions 1310, 1320, 1330 that may be used as rings 120, 320 and/or spokes 620 in a non-pneumatic tire 100, 300, 600. The constructions 1310, 1320, 1330 may have a plurality of closed cells 1311, 1321, 1331 defined by the three-dimensional structure of the fabric 1313, 1323, 1333.

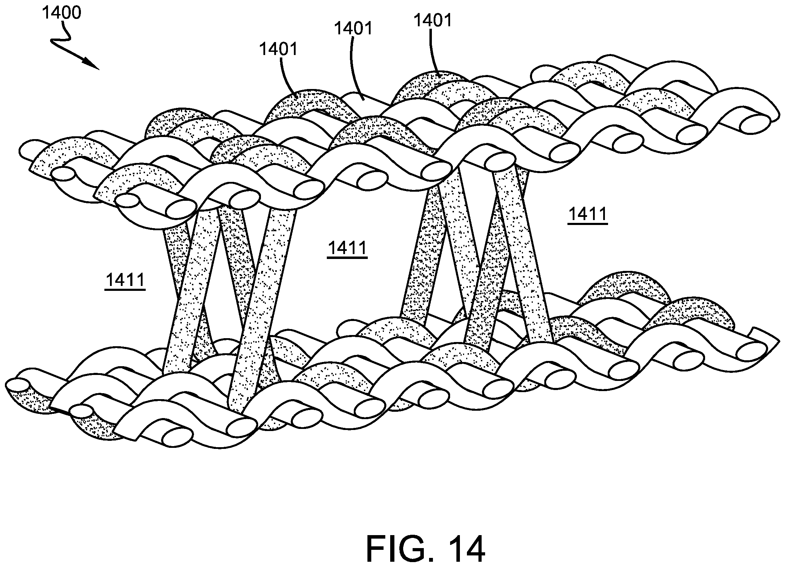

Fig. 14 shows an enhanced view of an example construction 1400 detailing the interrelationships of individual fibers 1401 for use as rings 120, 320 and/or spokes 620 in a non-pneumatic tire 100, 300, 600. The construction 1400 may have a plurality of open cells 1411 defined by the three-dimensional structure of the fabric 1401.

## Claims

1. A tire having an axis of rotation, the tire (300, 600) comprising a circular tread band (310, 610), a circular hub (315, 615) for attachment to an axle and a structure located radially between the tread band (310, 610) and the hub (315, 615), the structure including a plurality of annular rings (320) and/or a plurality of spokes (620), wherein the rings (320) or spokes (620) respectively interconnect the tread band (300, 600) and the hub (315, 615) and are configured to transfer a load from the tread band (310, 610) to the hub (315, 615), and wherein (i) the plurality of rings (320) comprises a first group of rings being disposed axially adjacent each other and a second group of rings being concentric and disposed radially adjacent each other; and/or (ii) the plurality of spokes (620) comprises a group of radially extending spokes disposed axially adjacent each other.

2. The tire as set forth in claim 1 wherein the rings (320) of the plurality of rings include reinforcement members of yarn, filaments, fibers, and/or fabric; or wherein the rings (320) include layers of fabric.

3. The tire as set forth in claim 1 or 2 wherein the rings (320) of the plurality of rings include layers connected together by reinforcement members.

4. The tire as set forth in at least one of the previous claims wherein the rings (320) of the plurality of rings include knitted layers.

5. The tire as set forth in at least one of the previous claims wherein the rings (320) of the plurality of rings include a layer of individual pile fibers connecting a first layer of fabric and a second layer of fabric.

6. The tire as set forth in at least one of the previous claims wherein the rings (320) of the plurality of rings include a layer of fabric piles connecting a first layer and a second layer.

7. The tire as set forth in at least one of the previous claims wherein the plurality of rings (320) are interconnected by annular bands.

8. The tire as set forth in claim 7 wherein the annular bands are constructed of rubber, of plastic or of metal.

9. The tire as set forth in at least one of the previous claims wherein the first group of rings comprises from 2-20 or from 3 to 10 axially adjacent distinct rings and/or wherein the second group of rings comprises 2 to 10 or from 2 to 5 concentric and radially adjacent distinct rings.

10. The tire as set forth in at least one of the previous claims wherein the spokes (620) include layers of twisted fabric; or wherein the spokes (620) include reinforcement members of yarn, filaments, fibers, and/or fabric.

11. The tire as set forth in at least one of the previous claims wherein the spokes (620) include layers connected together by reinforcement members.

12. The tire as set forth in at least one of the previous claims wherein the spokes (620) include knitted layers.

13. The tire as set forth in at least one of the previous claims wherein the spokes (620) include a layer of individual pile fibers connecting a first layer of fabric and a second layer of fabric.

14. The tire as set forth in at least one of the previous claims wherein the spokes (620) include a layer of fabric piles connecting a first layer and a second layer.

15. The tire as set forth in at least one of the previous claims wherein the tire (300, 600) is a non-pneumatic tire.
